# EUROPEAN PATENT SPECIFICATION

(11) **EP 1 147 958 B1**
(45) Date of publication and mention of the grant of the patent: **08.12.2004**
(21) Application number: 01000117.0
(22) Date of filing: 19.04.2001
(51) Int. Cl.: B60S 3/00

(54) **Automatic Vehicle Washing Apparatus**
Automatische Kraftfahrzeugwaschanlage
Installation de lavage automatique pour véhicule

(30) Priority: 20.04.2000 FI 20000961
(43) Date of publication of application: 24.10.2001
(73) Proprietor: Tammermatic Oy, 33300 Tampere (FI)
(72) Inventor: Salonen, Asko, 33530, Tampere (FI); Syvälahti, Esa, 37120, Nokia (FI)
(74) Representative: Huhtanen, Ossi Jaakko

(56) References cited:
- EP-A- 1 044 859
- DE-A- 3 401 379
- DE-U- 9 422 132
- US-A- 5 557 820
- PATENT ABSTRACTS OF JAPAN vol. 1997, no. 06, 30 June 1997 (1997-06-30) -& JP 09 039746 A (NISSEI BUILD KOGYO CO LTD), 10 February 1997 (1997-02-10)

## Description

The invention relates to an automatic vehicle washing apparatus which comprises washing nozzles and a drying nozzle, which form an integral unit.

In an automatic vehicle washing apparatus the washing unit and the drying apparatus are typically placed in the same unit to save space. Since the optimal distance of the washing unit from the surface of the vehicle to be washed differs from that of the drying apparatus, it is often necessary to compromise on the distance, which means that the distance of either unit from the vehicle surface is not optimal. Furthermore, it is rather difficult to arrange the units so that they can be turned slightly with respect to the surface of the vehicle to be washed as described e.g. in German publication 4,431,102. All in all, the structure of the unit is rather bulky and complicated.
Furthermore, the document EP-A-1 044 859 (Art. 54 (3)) shows a washing apparatus comprising washing nozzles and a drying nozzle, which form an integrated unit and are arranged substantially on the opposite side in respect to the drying nozzle. The unit allows rotation more than 360°.

The object of the present invention is to provide an efficient and simple versatile automatic vehicle washing apparatus.

The washing apparatus of the invention is characterized in that the washing nozzles are arranged substantially on the opposite side of the unit with respect to the drying nozzle and the unit is arranged to be turned more than approximately 180 degrees, and that the apparatus comprises limiters which prevent the unit from rotating over more than 360°.

The basic idea of the invention is that washing nozzles and a drying nozzle are placed in the same unit in the automatic vehicle washing apparatus, the unit is arranged to be turned at least about 180 degrees, and that the axial feed connectors for water and/or washing chemicals are not necessary, since the limited range of rotation allows use of flexible delivery hoses directly connected to the washing nozzles. The idea of a preferred embodiment is that the drying nozzle is connected to a fan by a rotating joint, and thus the drying nozzle can be turned without moving the fan. The idea of a second preferred embodiment is that water and possibly also washing chemicals are fed to the washing nozzle via a connector which allows rotation. The idea of a third preferred embodiment is that the unit including the washing nozzles and the drying nozzle is arranged to be turned more than 250 degrees, preferably about 300 degrees.

An advantage of the invention is that the automatic vehicle washing apparatus is very practical in respect of its structure and space utilization. In the unit both the washing nozzles and the drying nozzle can be placed at an optimal distance from the vehicle surface independently of each other. The whole unit is rather light because the drying nozzles are connected to the fan through a rotating joint such that the drying nozzles can be turned without moving the fan. Since water and washing chemicals can be fed to the washing nozzles through a connector which allows rotation, the pipes and hoses which feed water and washing chemicals are not subjected to harmful mechanical stress. When the unit is arranged to be rotated more than 250 degrees, preferably about 300 degrees, air, washing chemicals and water can be sprayed onto the vehicle surface at their optimal angles.

The invention will be described in greater detail in the accompanying drawings, in which
Figure 1 schematically illustrates an automatic vehicle washing apparatus,
Figure 2 is a cross-sectional view of a detail of a rotating joint in a drying nozzle of the washing apparatus according to the invention,
Figure 3 is a cross-sectional view of a feed connector for water and chemicals in the washing apparatus shown in Figure 1, and
Figure 4 is a cross-sectional view of a detail of the washing apparatus shown in Figure 1 along line A-A.

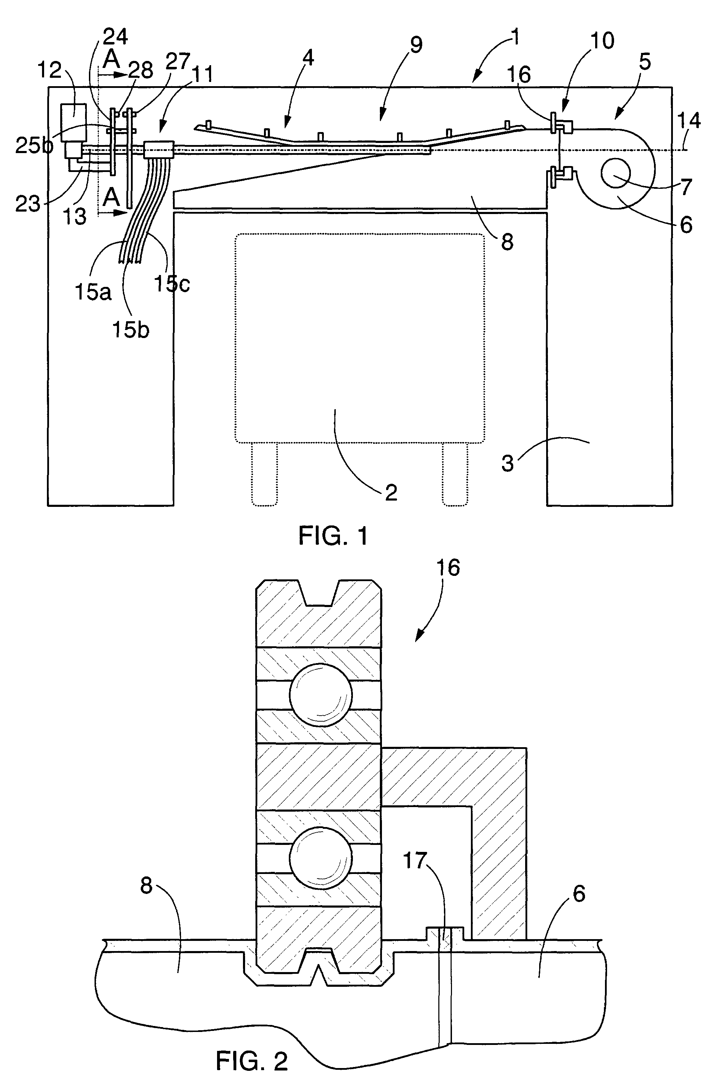

Figure 1 illustrates an automatic vehicle washing apparatus 1 and the dotted line presents the vehicle 2 to be washed. The automatic vehicle washing apparatus 1 comprises a frame 3, which is arranged to move on rails to and fro in the longitudinal direction of the vehicle 2 to be washed in the manner known per se. The automatic vehicle washing apparatus 1 is provided with washing nozzles 4 for pre-wash, washing and waxing, for example. The washing chemicals and the water used for washing the vehicle can be sprayed with various nozzles or nozzles of only one kind are used for each purpose. Water is most preferably sprayed by high-pressure nozzles which produce a pointed jet.

The automatic vehicle washing apparatus 1 further includes a drying apparatus 5 for drying the vehicle 2. The drying apparatus comprises at least one fan 6 which is driven by a motor 7, typically by an electric motor. The airflow generated by the fan 6 is fed to a drying nozzle 8. The drying nozzle 8 comprises an air divider, an opening or openings, or nozzles through which the drying air flows from the air divider onto the surface of the vehicle 2. The air divider is most preferably wedge-shaped: it is at its widest at the end towards the fan 6 and tapers away from the fan 6. Thus the airflow can be divided evenly substantially along the whole length of the drying nozzle 8.

The drying nozzle 8 and the washing nozzles 4 and their support structures form together an overhead unit 9, in which the drying nozzle 8 is arranged substantially on the opposite side with respect to the washing nozzles 4. The drying nozzle 8 is connected to the fan 6 with a rotating joint 10 of the drying nozzle. Water and washing chemicals are fed to the washing nozzles 4 via a feed connector 11. The automatic vehicle washing apparatus 1 also comprises a rotating motor 12, which is arranged to turn a pivot shaft 13 connected to the overhead unit 9. Thanks to the rotating joint 10 of the drying nozzle and the feed connector 11 for washing chemicals and water, the overhead unit 9 can be rotated by a rotating device consisting of the rotating motor 12 and the pivot shaft 13 around the turning centre 14 of the overhead unit illustrated by a dotted and dashed line. The overhead unit 9 can be rotated at least about 180 degrees, in which case the rotating device can be used for choosing whether to direct the washing nozzles 4 or the drying nozzle 8 at the vehicle 2. The overhead unit 9 can preferably be rotated over 250 degrees, which allows to turn both the washing nozzles 4 and the drying nozzle 8 to an optimal angle with respect to the vehicle 2 surface in the direction of the longitudinal axle of the vehicle 2. However, the apparatus preferably comprises limiters which prevent the overhead unit 9 from rotating over 360 degrees. In that case e.g. the structures for feeding washing chemicals and water to the washing nozzles 4 can be implemented in a relatively simple manner. Most preferably the overhead unit 9 can be turned about 300 degrees. Since the overhead unit 9 can be turned over 180 degrees, it is easy to place the washing nozzles 4 and the drying nozzle 8 alternately at an optimal distance from the vehicle 2 surface. The optimal distance of the drying nozzle 8 from the vehicle 2 surface is typically about 100 mm and that of the washing nozzle 4 from the vehicle 2 surface about 250 mm. It is advantageous to place the drying nozzle and the washing nozzles on the opposite sides during the washing phase, too, because this decreases the amount of water which splashes onto the dryer.

Water and washing chemicals, such as detergent for pre-wash and wax, are fed to the feed connector 11 for water and washing chemicals by pipes or delivery hoses 15a to 15c. For the sake of clarity, the figures do not show means for moving the frame and the washing and drying means nor containers or means for feeding water and washing chemicals because these means as well as their function and structure are self-evident to a person skilled in the art. Neither do the figures show means for washing and drying the vehicle sides.

The rotating joint 10 of the drying nozzle is provided with e.g. four grooved wheels 16, and thus the drying nozzle 8 can rotate around the turning centre 14 of the overhead unit, being supported by the grooved wheels 16. Figure 2 shows a detail of the rotating joint 10 of the drying nozzle. At the rotating joint 10 of the drying nozzle, the drying nozzle 8 is round in cross-section, thanks to which it can move along the circumference defined by the stationary grooved wheels 16. The grooved wheels 16 are attached to an immovable fan 6 so that they cannot move. Since the fan 6 is immovable, i.e. it does not turn along with the overhead unit 9, the overhead unit 9 is pretty light and thus easy to rotate without great force. There is a groove in the middle of the grooved wheel 16 and the wall of the drying nozzle 8 is provided with a wedge which fits in the groove of the grooved wheel 16. On the both sides of the wedge there are grooves which follow the shape of the grooved wheel 16. In that case rotation of the drying nozzle 8 is stable since it is supported by the grooved wheels 16. A gasket 17 can be arranged between the rotating drying nozzle 8 and the fan 6, which allows sliding of the ends of the drying nozzle 8 and the fan 6 in relation to each other. The gasket 17 can be attached either to the drying nozzle 8 or to the fan 6, or both the drying nozzle 8 and the fan 6 can be provided with gaskets. In the last-mentioned case a sliding surface is formed between the gaskets.

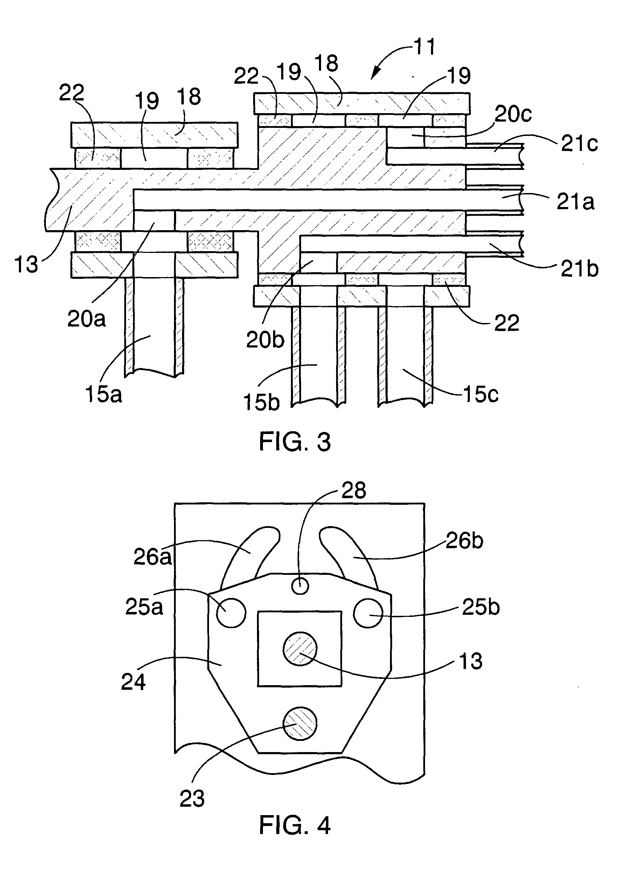

Figure 3 is a detailed cross-sectional view of the feed connector 11 for water and chemicals. The feed connector 11 comprises stationary sleeves 18, to which delivery hoses 15a to 15c are attached. Inside the sleeve 18 there is a feed channel 19 extending around the sleeve. There are holes 20a to 20c from the feed channel 19 to nozzle pipes 21a to 21c. The nozzle pipe 21a to 21c is used for supplying water and washing chemicals to the washing nozzles 4. The water used in washing is fed e.g. along the first delivery hose 15a via the hole 20a to the first nozzle pipe 21a and further to the washing nozzle 4. The second delivery hose 15b, for example, can be used for feeding detergent for pre-wash, in which case the pre-wash detergent is fed via the hole 20b to the second nozzle pipe 21b. Wax can be fed in a corresponding manner along the third delivery hose 15c via the hole 20c to the third nozzle pipe 21c. The feed connector 11 further comprises bearings and gaskets 22 arranged between the stationary, i.e. non-rotating, sleeve 18 and the rotating part of the connector. The bearings are preferably sliding bearings which at the same time form the gasket.

The automatic vehicle washing apparatus 1 can also be provided with a structure which allows yield of the overhead unit 9 if the vehicle due to a functional error accidentally touches the overhead unit 9. A detail of this structure is illustrated in Figure 4. As the vehicle 2 swings the overhead unit 9, the overhead unit 9 turns the rotating motor 12 via the pivot shaft 13. The motor is connected to a swinging frame 24 with a supporting bar 23. The swinging frame 24 is provided with bolts 25a and 25b, which are both arranged in a groove 26a and 26 b in the stationary frame. In a normal situation the bolts 25a and 25b are supported by the lower edges of the grooves 26a and 26b. As the overhead unit 9 swings in the first direction, the swinging frame 24 also turns, thus allowing the first bolt 25a to move upwards in the first groove 26a. When the overhead unit swings in the second direction, it turns the swinging frame 24, thus allowing the second bolt 25b to move upwards in the second groove 26b. Since the overhead unit 9 is rather light, a relatively light touch makes the overhead unit 9 yield, which substantially prevents scratches and damage to the vehicle. The device protecting from collision also comprises an optical or an electromagnetic sensor or a similar sensor 27 which monitors whether the counterpart 28 at the sensor in the swinging frame 24 is in its position. The sensor detects movement of the counterpart caused by swinging of the overhead unit 9 and gives an alarm of collision.

The drawings and the related description are only intended to illustrate the inventive concept. The details of the invention may vary within the scope of the claims. In the figures the drying nozzle 8 and the washing nozzles 4 form a overhead unit 9, but the drying nozzle and the washing nozzles can also form a unit for washing and drying the vehicle sides, which can be arranged to be turned in the same way as the overhead unit. Furthermore, the feed connectors 11 for water and/or washing chemicals are not necessary, but delivery hoses 15a to 15c can be made so flexible that they are directly connectable to the washing nozzles 4 and allow rotation of the overhead unit over 180 degrees. The washing chemicals can also be fed on top of the car otherwise than by an overhead nozzle. Since the overhead unit, however, comprises the drying and water nozzles, the invention is practical in this case, too.

## Claims

1. An automatic vehicle washing apparatus provided with washing nozzles (4) and a drying nozzle (8) which form an integrated unit, wherein the washing nozzles (4) are arranged substantially on the opposite side of the unit with respect to the drying nozzle (8) and said unit is arranged to be turned more than approximately 180 degrees and the apparatus comprises limiters which prevent the unit from rotating more than 360 degrees.

2. A vehicle washing apparatus according to claim **1, characterized in that** said unit is arranged to be turned more than 250 degrees.

3. A vehicle washing apparatus according to claim 2, **characterized in that** said unit is arranged to be turned about 300 degrees.

4. A vehicle washing apparatus according to any one of the preceding claims, **characterized in that** the vehicle washing apparatus (1) comprises a fan (6), from which air is fed to the drying nozzle (8), and the drying nozzle (8) and the fan (6) are connected with a joint (10) which allows rotation of the drying nozzle (8) when the fan (6) is non-rotating.

5. A vehicle washing apparatus according to any one of the preceding claims, **characterized in that** the vehicle washing apparatus (1) comprises a feed connector (11) via which a medium is fed to the washing nozzles (4), the feed connector (11) being arranged to allow turning of the washing nozzles (4) whereas the means for feeding the medium to the feed connector (11) can be non-rotating.

6. A vehicle washing apparatus according to any one of the preceding claims, **characterized in that** the washing nozzles (4) and the drying nozzle (8) are placed in the top of the vehicle washing apparatus (1) so that they form an overhead unit (9).

7. A vehicle washing apparatus according to any one of the preceding claims, **characterized in that** the vehicle washing apparatus (1) comprises a swinging frame (24) which is provided with at least two bolts (25a, 25b), which are both arranged in a separate groove (26a, 26b), and that the swinging frame (24) is connected to the unit formed by the washing nozzles (4) and the drying nozzle (8) so that either one of the bolts (25a, 25b) can move in its groove (26a, 26b) as said unit swings.

## Patentansprüche

1. Automatische Fahrzeugwaschanlage mit Waschdüsen (4) und einer Trocknungsdüse (8), die eine integrierte Einheit ausbilden, bei der die Waschdüsen (4) bezüglich der Trocknungsdüse (8) im Wesentlichen auf der gegenüberliegenden Seite der Einheit angeordnet sind, die Einheit derart angeordnet ist, dass diese um mehr als etwa 180° gedreht werden kann, und die Anlage Begrenzer aufweist, die eine Drehung der Einheit um mehr als 360° verhindern.

2. Automatische Fahrzeugwaschanlage nach Anspruch 1, **dadurch gekennzeichnet, dass** die Einheit um mehr als 250° drehbar ist.

3. Automatische Fahrzeugwaschanlage nach Anspruch 2, **dadurch gekennzeichnet, dass** die Einheit um 300° drehbar ist.

4. Automatische Fahrzeugwaschanlage nach einem der vorangehenden Ansprüche, **dadurch gekennzeichnet, dass** die Fahrzeugwaschanlage (1) einen Lüfter (6) aufweist, der die Trocknungsdüse (8) mit Luft versorgt, und dass die Trocknungsdüse (8) und der Lüfter (6) durch ein Verbindungsteil (10) verbunden sind, das eine Drehung der Trocknungsdüse (8) ermöglicht, wenn der Lüfter (6) nicht rotiert.

5. Automatische Fahrzeugwaschanlage nach einem der vorangehenden Ansprüche, **dadurch gekennzeichnet, dass** die Fahrzeugwaschanlage (1) ein Zufuhrverbindungsstück (11) aufweist, über das die Waschdüsen (4) mit einem Medium versorgt werden, wobei das Zufuhrverbindungsstück (11) derart angeordnet ist, dass es eine Drehung der Waschdüsen (4) ermöglicht, während die Mittel zur Zufuhr des Mediums zu dem Zufuhrverbindungsstück (11) nicht drehbar ausgebildet sein können.

6. Automatische Fahrzeugwaschanlage nach einem der vorangehenden Ansprüche, **dadurch gekennzeichnet, dass** die Waschdüsen (4) und die Trocknungsdüse (8) oben an der Fahrzeugwaschanlage (1) angeordnet sind, so dass diese eine Überkopfeinheit (9) ausbilden.

7. Automatische Fahrzeugwaschanlage nach einem der vorangehenden Ansprüche, **dadurch gekennzeichnet, dass** die Fahrzeugwaschanlage (1) einen schwingenden Rahmen (24) aufweist, der mit mindestens zwei Bolzen (25a, 25b) versehen ist, die beide in separaten Aussparungen (26a, 26b) angeordnet sind, und dass der schwingende Rahmen (24) mit der von den Waschdüsen (4) und der Trocknungsdüse (8) ausgebildeten Einheit derart verbunden ist, dass einer der beiden Bolzen (25a, 25b) in seiner Aussparung (26a, 26b) bewegt werden kann, wenn die Einheit verschwenkt wird.

## Revendications

1. Installation de lavage automatique pour véhicule pourvue des buses de lavage (4) et une buse de séchage (8) qui forment une unité intégrée, dans laquelle les buses de lavage (4) sont disposées essentiellement sur le côté opposite relatif à la buse de séchage (8) et ladite unité est disposée à être tournée aux environ plus de 180 degrés et l'installation comprenant des limiteurs afin d'empêcher l'unité de tourner plus de 360 degrés.

2. Installation de lavage pour véhicule selon la revendication 1, **caractérisé en ce que** ladite unité est disposée à être tournée plus de 250 degrés.

3. Installation de lavage pour véhicule selon la revendication 2, **caractérisé en ce que** ladite unité est disposée à être tournée aux environ de 300 degrés.

4. Installation de lavage pour véhicule selon l'une quelconque des revendications précédentes, **caractérisé en ce que** l'installation de lavage pour véhicule (1) comprend un ventilateur (6) à partir duquel l'air est amené à la buse de séchage (8), la buse de séchage (8) étant reliée au ventilateur (6) par un joint (10) permettant la buse de séchage (8) de tourner quand le ventilateur (6) est non-tournant.

5. Installation de lavage pour véhicule selon l'une quelconque des revendications précédentes, **caractérisé en ce que** l'installation de lavage pour véhicule (1) comprend un connecteur d'alimentation (11) par lequel une substance est amenée aux buses de lavage (4), le connecteur d'alimentation (11) étant disposé à permettre des buses de lavage (4) à être tournées tandis que les moyens pour amener la substance au connecteur d'alimentation (11) peuvent être non-tournant.

6. Installation de lavage pour véhicule selon l'une quelconque des revendications précédentes, **caractérisé en ce que** les buses de lavage (4) et la buse de séchage (8) sont mises sur la partie supérieure de l'installation de lavage pour véhicule (1) de façon qu'elles forment une unité en dessus (9).

7. Installation de lavage pour véhicule selon l'une quelconque des revendications précédentes, **caractérisé en ce que** l'installation de lavage pour véhicule (1) comprend un cadre pendulaire (24) pourvu d'au moins deux boulons (25a, 25b) qui sont tous les deux disposés dans des coulisses séparées (26a, 26b), et **en ce que** le cadre pendulaire (24) est relié à l'unité formée par les buses de lavage (4) et la buse de séchage (8) de façon à permettre lequel des deux boulons (25a, 25b) à se déplacer dans sa coulisse respective (26a, 26b) quand ladite unité fait un mouvement pendulaire.
